(19) Europäisches Patentamt
European Patent Office
Office européen des brevets

(11) **EP 4 202 755 A1**

(12) **EUROPEAN PATENT APPLICATION**
published in accordance with Art. 153(4) EPC

(43) Date of publication:
**28.06.2023 Bulletin 2023/26**

(51) International Patent Classification (IPC):
**G06F 30/20** (2020.01)    **F24F 11/46** (2018.01)
**F24F 11/64** (2018.01)    **G06F 111/06** (2020.01)

(21) Application number: **21875558.5**

(52) Cooperative Patent Classification (CPC):
**F24F 11/46; F24F 11/64; G06F 30/10; G06F 30/20;**
G06F 2111/06

(22) Date of filing: **28.09.2021**

(86) International application number:
**PCT/JP2021/035478**

(87) International publication number:
**WO 2022/071257 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2020 JP 2020163960**

(71) Applicant: **DAIKIN INDUSTRIES, LTD.**
**Osaka-shi, Osaka 530-0001 (JP)**

(72) Inventors:
• **IZUMI, Yuuta**
**Osaka-shi, Osaka 530-0001 (JP)**
• **NISHIMURA, Tadafumi**
**Osaka-shi, Osaka 530-0001 (JP)**
• **MORITA, Hiroshi**
**Suita-shi, Osaka 565-0871 (JP)**
• **INOUE, Haruki**
**Suita-shi, Osaka 565-0871 (JP)**

(74) Representative: **Global IP Europe**
**Patentanwaltskanzlei**
**Pfarrstraße 14**
**80538 München (DE)**

(54) **COMBINATION DETERMINATION SYSTEM**

(57)    A conventional method of solving a combination optimization problem has a problem in that the optimization cannot be efficiently achieved because candidates of a combination yielding an optimal value of a predetermined index are selected at random. A combination determination system includes a first combination selection unit (210), an index calculation unit (220), an evaluation unit (230), a storage unit (240), a selection criterion update unit (250), and a combination determination unit (260). The first combination selection unit (210) selects a first combination that is a candidate of a combination, based on a selection criterion for selecting the first combination. The index calculation unit (220) calculates an index yielded from the first combination. The evaluation unit (230) evaluates the first combination based on the index. The storage unit (240) stores the first combination, the index, and an evaluation result. The selection criterion update unit (250) updates the selection criterion based on the evaluation result. The combination determination unit (260) determines the combination based on a first combination previously selected and the index yielded therefrom.

FIG. 3

**Description**

**TECHNICAL FIELD**

The present disclosure relates to a combination determination system.

**BACKGROUND ART**

As disclosed in PTL 1 (Japanese Unexamined Patent Publication No. 2006-48475), there is a technique of solving a combination optimization problem to determine a combination of a plurality of targets yielding an optimal value of a predetermined index.

**SUMMARY OF THE INVENTION**

<Technical Problem>

The conventional method of solving a combination optimization problem has a problem in that the optimization cannot be efficiently achieved because candidates of the combination yielding the optimal value of the predetermined index are selected at random.

<Solution to Problem>

A combination determination system according to a first aspect determines a combination of a plurality of targets. The combination determination system includes a first combination selection unit, an index calculation unit, an evaluation unit, a storage unit, a selection criterion update unit, and a combination determination unit. The first combination selection unit selects a first combination that is a candidate of the combination, based on a selection criterion for selecting the first combination. The index calculation unit calculates a predetermined index yielded from the first combination selected. The evaluation unit evaluates the first combination selected, based on the index calculated. The storage unit stores the first combination selected, the index calculated, and an evaluation result obtained by the evaluation unit. The selection criterion update unit updates the selection criterion based on the evaluation result stored by the storage unit. The combination determination unit determines the combination based on at least a first combination previously selected and the index associated with the first combination previously selected that are stored by the storage unit.

When determining a combination yielding an optimal predetermined index as a combination of a plurality of targets, the combination determination system according to the first aspect selects the first combination that is a candidate of an optimal combination based on the selection criterion. The selection criterion is sequentially updated based on the evaluation result of each first combination. As a result, the combination determination system selects the first combination not at random but based on the evaluation result, whereby the optimization can be efficiently performed.

A combination determination system according to a second aspect is the combination determination system according to the first aspect, in which the selection criterion is for selecting the first combination based on a result of sampling from a predetermined probability distribution.

With this configuration, the combination determination system according to the second aspect can select the first combination by utilizing the evaluation result on one hand, and can select the first combination that is unlikely to be selected from the evaluation result on the other hand.

A combination determination system according to a third aspect is the combination determination system according to the second aspect, in which the probability distribution is a $\beta$ distribution.

With this configuration, the combination determination system according to the third aspect can update the $\beta$ distribution as a posterior distribution after selecting the first combination.

A combination determination system according to a fourth aspect is the combination determination system according to the first aspect, in which the selection criterion is for selecting the first combination at random with a probability $\varepsilon$. The selection criterion is also for selecting the first combination based on an average value calculated from the evaluation result stored by the storage unit, with a probability $1-\varepsilon$.

With this configuration, the combination determination system according to the fourth aspect can select the first combination that is unlikely to be selected from the evaluation result with the probability $\varepsilon$, and can select the first combination by utilizing the average value calculated from the evaluation result with the probability $1-\varepsilon$.

A combination determination system according to a fifth aspect is the combination determination system according to the first aspect, in which the selection criterion is for selecting the first combination based on an average value and number of selected times that are calculated from the evaluation result stored by the storage unit.

With this configuration, the combination determination system according to the fifth aspect can select the first combination by utilizing the average value calculated from the evaluation results on one hand, and can select the first combination that is unlikely to be selected from the evaluation result while taking into account the number of selected times calculated from the evaluation results on the other hand.

A combination determination system according to a sixth aspect is the combination determination system according to any one of the first to fifth aspects, in which the plurality of targets are a plurality of devices forming a device system. The index includes a total cost for the plurality of devices installed.

With this configuration, the combination determination system according to the sixth aspect can determine a device configuration that optimizes (minimizes) the total cost and the like in the device system.

A combination determination system according to a seventh aspect is the combination determination system according to the sixth aspect, in which the device system is an air conditioning system. The plurality of devices at least include an outdoor unit and an indoor unit.

With this configuration, the combination determination system according to the seventh aspect can determine a device configuration, including an outdoor unit, an indoor unit, and the like, that optimizes (minimizes) the total cost and the like in an air conditioning system.

## BRIEF DESCRIPTION OF THE DRAWINGS

FIG. 1 is a diagram illustrating an example of a configuration of an air conditioning system.
FIG. 2 is a graph illustrating an image of Iterated local search.
FIG. 3 is a schematic functional block diagram of a combination determination system.
FIG. 4 is a diagram illustrating an example of a β distribution.
FIG. 5A is a flowchart of optimization processing.
FIG. 5B is a flowchart of the optimization processing.
FIG. 5C is a flowchart of the optimization processing.

## DESCRIPTION OF EMBODIMENTS

(1) Overview of combination determination system

A combination determination system 200 determines a combination of a plurality of targets based on a predetermined index. In the present embodiment, the combination determination system 200 determines an optimal combination of a plurality of targets yielding an optimal value of the predetermined index.

Specifically, the plurality of targets are devices such as a plurality of outdoor units 10 and indoor units 20 forming an air conditioning system 100. Furthermore, the combination of the plurality of targets is a combination of devices such as the outdoor units 10 and the indoor units 20 forming the air conditioning system 100. In other words, the combination of the plurality of targets is a device configuration of the air conditioning system 100. The predetermined index is an objective function in an optimization problem. The predetermined index includes a total cost for devices such as the outdoor units 10 and the indoor units 20 installed in the air conditioning system 100. Thus, the combination determination system 200 of the present embodiment determines an optimal combination of devices forming the air conditioning system 100 that yields the optimal (lowest) total cost and the like.

(2) Air conditioning system

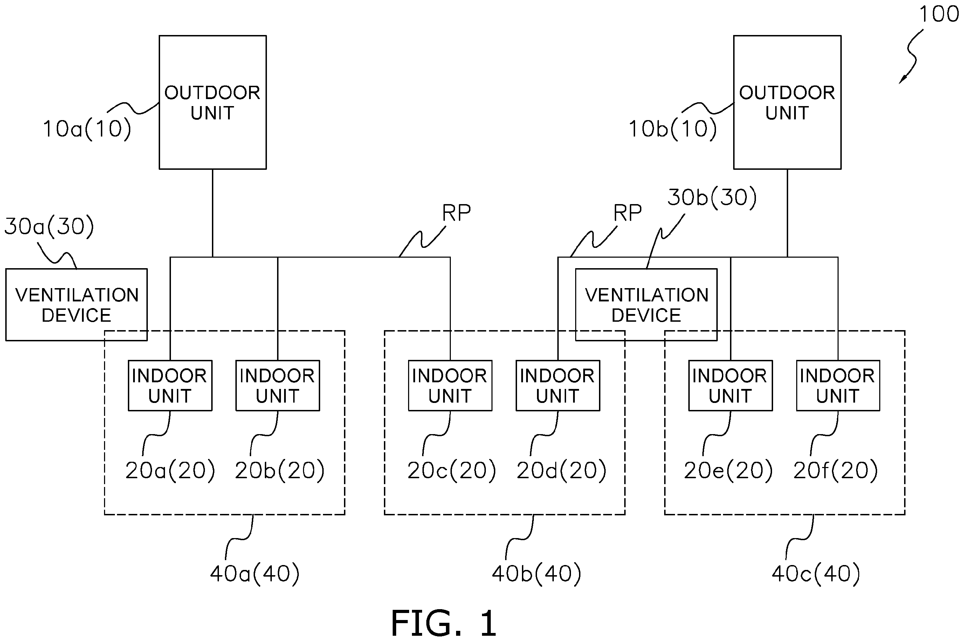

The air conditioning system 100 is installed in a building and performs air conditioning for an air conditioning target space. The air conditioning system 100 mainly includes the outdoor unit 10, the indoor unit 20, and a ventilation device 30. FIG. 1 is a diagram illustrating an example of a configuration of the air conditioning system 100. As illustrated in FIG. 1, the air conditioning system 100 includes two outdoor units 10a and 10b, six indoor units 20a to 20f, and two ventilation devices 30a and 30b. The outdoor units 10a and 10b are each coupled to three of the indoor units 20a to 20f through refrigerant pipes RP. Each of the indoor units 20a to 20f is coupled to any one of the two outdoor units 10a and 10b, and is installed in any one of zones 40a to 40c of the building in which the air conditioning system 100 is installed. The zone 40 is an air conditioning target space of the air conditioning system 100. Two of the indoor units 20a to 20f are installed in each of the zones 40a to 40c. The indoor units 20a to 20f maintain a comfortable state in the zones 40a to 40c by removing thermal load on the zones 40a to 40c. The ventilation devices 30a and 30b ventilate one or a plurality of the zones 40a to 40c to maintain a comfortable state in the zones 40a to 40c.

(3) Determination of optimal combination of devices forming air conditioning system

Before the air conditioning system 100 is installed in a building, an optimal combination of devices forming the air conditioning system 100 needs to be determined. Examples of parameters determined by a combination of devices forming the air conditioning system 100 include: the number of indoor units 20 installed in each zone 40; the model and performance (such as capacity) of each indoor unit 20; the model and performance (such as capacity) of each outdoor unit 10; the model and performance (such as ventilation volume) of each ventilation device 30; a refrigerant system; and the like. The refrigerant system is, for example, information indicating which outdoor unit 10 is coupled to which indoor unit 20.

As described above, the optimal combination of devices forming the air conditioning system 100 is a combination of devices minimizing a predetermined index including a total cost. The total cost is a sum of electricity cost and device cost. The electricity cost is an electricity charge required for operating the air conditioning system 100. The electricity cost is calculated from the power consumption of the air conditioning system 100 during a target period. Examples of the device cost include the cost for purchasing a device itself, the cost for installation work for the device, the cost for maintenance for the device, and the like. Thus, to calculate the total cost, at least the power consumption of the air conditioning system 100 during the target period needs to be calculated.

Generally, the power consumption is calculated through simulation based on a combination of devices forming the air conditioning system 100, a condition of the zone 40, and the like. This means that the total cost depending on the power consumption cannot be mathematically expressed as part of the objective function. Thus, the optimization problem for determining the optimal combination of devices forming the air conditioning system 100 corresponds to a black-box optimization problem. Furthermore, to determine the optimal combination of devices forming the air conditioning system 100, a constraint condition such as setting an unprocessed thermal load to be equal to or less than an allowable value needs to be taken into account. Thus, the optimization problem corresponds to a black-box optimization problem with a constraint condition.

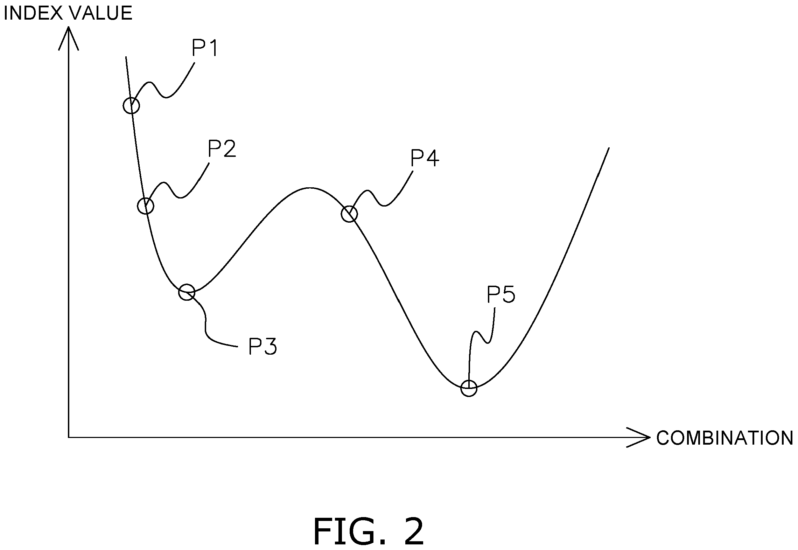

Generally, Iterated local search is used for solving a black-box optimization problem. FIG. 2 is a graph illustrating an image of the Iterated local search. The Iterated local search will be described with reference to FIG. 2. Hereinafter, a combination of devices forming the air conditioning system 100 may be simply referred to as a combination. An optimal combination of devices forming the air conditioning system 100 may be simply referred to as an optimal combination.

In FIG. 2, the horizontal axis represents combination, and the vertical axis represents index value of the predetermined index. The closeness on the horizontal axis indicates the closeness between configurations of combinations. The closeness between configurations of combinations means that, for example, a configuration obtained by adding one indoor unit 20 to a configuration of a certain combination is closer to the original combination than a configuration obtained by adding two indoor units 20. The curve in FIG. 2 is a function associating each combination with its index value. Thus, a point on the curve in FIG. 2 represents each combination taking into account the index value, and a continuous movement of the point on the curve represents a gradual change in the configuration of the combination. Assuming that the curve in FIG. 2 expresses all combinations, the goal of the black-box optimization problem is to find a point P5 on the curve with the minimum index value.

With the Iterated local search, an arbitrary combination is first selected. The selection of one arbitrary combination unlike in neighbor search described below will be hereinafter referred to as initialization. Here, the initialized combination is assumed to be a point P1 in FIG. 2. The initialized combination serves as a source for searching for another combination, and thus is set as a search source combination. Here, the combination at the point P1 is set as the search source combination. When the initialized combination yields the minimum index value at the time of initialization, the initialized combination is set as a tentative optimal combination. At this timing of the first initialization, the combination at the point P1 is set as the tentative optimal combination because there is no index value to be compared with.

With the Iterated local search, a new combination with a slight change in configuration from the search source combination is then searched for. Hereinafter, this search will be referred to as neighbor search. If the index value of the combination found by the neighbor search is smaller than the index value yielded from the search source combination, the combination found by the neighbor search is set as the search source combination and the next neighbor search is performed. At this time, if the index value of the combination found by the neighbor search is smaller than the index value of the tentative optimal combination, the combination found by the neighbor search is set as the tentative optimal combination. On the other hand, if the index value of the combination found by the neighbor search is equal to or larger than the index value yielded from the search source combination, the next neighbor search is performed without updating the search source combination.

When this neighbor search is repeated for certain times, the search source combination and the tentative optimal combination, which are the combination at the point P1 in FIG. 2 at the beginning, transition as if they are rolling on the curve, to the combination at a point P2, and then to the combination at a point P3. The index value obtained by the combination at the point P3 is the local minimum. Thus, once the combination at the point P3 becomes the search source combination, no combination yielding a smaller index value can be found with the neighbor search further repeated.

In view of this, with the Iterated local search, the initialization is performed again when the search source combination is not changed by the neighbor search repeated for a predetermined number of times. The combination as a result of this initialization is assumed to be at a point P4 in FIG. 2. Thus, the combination at the point P4 is set as the search source combination. The combination at the point P4 yields the index value larger than the index value yielded from the tentative optimal combination (combination at the point P3), which is the minimum value at the timing of the initialization. Thus, the tentative optimal combination is not updated.

When the neighbor search is then similarly repeated, the combination at a point P5 in FIG. 2 is set as the search source combination and the tentative optimal combination. With the Iterated local search, the initialization is performed again when the combination at the point P5 becomes the search source combination because no combination yielding a smaller index value can be found with the neighbor search further repeated. In the Iterated local search, this processing of "performing the initialization and repeating the neighbor search until the search source combination is not changed despite the neighbor search repeated for a predetermined number of times" is repeated for a predetermined number of times. Then, in the Iterated local search, a final tentative optimal combination is determined as the optimal combination. Assuming that the curve in FIG. 2 expresses all the combinations, the combination at the point P5 is determined as the optimal combination.

The above-described neighbor search has conventionally been performed at random. Unfortunately, for the black-box optimization problem, the index value needs to be calculated through simulation for each combination found by the neighbor search, meaning that each neighbor search involves a huge calculation cost. For example, to calculate the power consumption in the target period, the power consumptions at numerous time points in the target period need to be calculated through simulation and summed up. Thus, when the neighbor search is performed at random, the neighbor search is performed for a large number of times until the optimal combination is found, resulting in a huge calculation cost.

In view of this, the combination determination system 200 of the present embodiment evaluates the combination selected by each neighbor search, to efficiently search for the optimal combination based on the result of the evaluation. The combination determination system 200 of the present embodiment thus configured can reduce the number of times the neighbor search is performed until the optimal combination is found and can reduce the calculation cost.

(4) Configuration of combination determination system

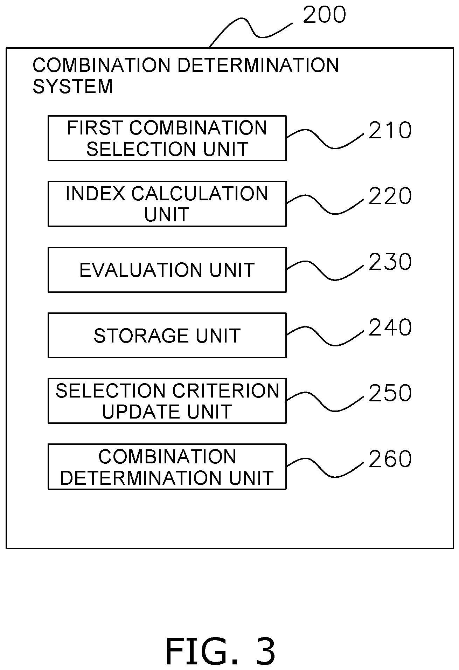

FIG. 3 is a schematic functional block diagram of the combination determination system 200. The combination determination system 200 mainly includes a first combination selection unit 210, an index calculation unit 220, an evaluation unit 230, a storage unit 240, a selection criterion update unit 250, and a combination determination unit 260.

The combination determination system 200 of the present embodiment solves an optimization problem by using Iterated local search using what is known as Thompson sampling. Thompson sampling is implemented mainly by the functions of the first combination selection unit 210 and the selection criterion update unit 250.

The combination determination system 200 includes one or a plurality of computers. When the combination determination system 200 includes a plurality of computers, the plurality of computers are communicably coupled to each other via a network. One or a plurality of computers forming the combination determination system 200 includes a control calculation device and a storage device. A processor such as a CPU or a GPU can be used as the control calculation device. The control calculation device reads a program stored in the storage device and executes predetermined image processing and calculation processing based on the program. Furthermore, based on the program, the control calculation device can write a calculation result to the storage device and read information stored in the storage device. The first combination selection unit 210, the index calculation unit 220, the evaluation unit 230, the storage unit 240, the selection criterion update unit 250, and the combination determination unit 260 are various functional blocks implemented by the control calculation device and the storage device.

Now, for the formulae below, symbols are defined as follows.

I: Set of zones
J: Set of indoor units
K: Set of outdoor units
V: Set of ventilation devices
T: Set of data at time points in a target period
$a_j$: Thermal load processable by an indoor unit j ($j \in$ J)
$b_{it}$: Thermal load on a zone i ($i \in$ I) at a time point t ($t \in$ T)
$c_i$: Ventilation load on the zone i ($i \in$ I)
$d_v$: Ventilation load processable by a ventilation device v ($v \in$ V)
$e_k$: Thermal load processable by an outdoor unit k ($k \in$ K)
$p_j$: Price of the indoor unit j ($j \in$ J)

$q_k$: Price of the outdoor unit k (k $\in$ K)
$r_v$: Price of the ventilation device v (v $\in$ V)
$l_i$: The upper limit of the number of indoor units that can be installed in the zone i (i $\in$ I)
$m_k$: Upper limit of the number of indoor units that can be coupled to the outdoor unit k (k $\in$ K)
n: The upper limit of the number of outdoor units
s: Allowable value of unprocessed thermal load
$x_{ijk}$: 1 when the indoor unit j (j $\in$ J) installed in the zone i (i $\in$ I) is coupled to the outdoor unit k (k $\in$ K), and otherwise 0. The sign x is assumed to denote a vector.
$y_{iv}$: 1 when the ventilation device v (v $\in$ V) is installed in the zone i (i $\in$ I), and otherwise 0. The sign y is assumed to denote a vector.

The following formula defines $\delta_k$.

[Math. 1]

$$\delta_k = \begin{cases} 1 & (\sum_{i \in I} \sum_{j \in J} x_{ijk} > 0) \\ 0 & (\sum_{i \in I} \sum_{j \in J} x_{ijk} = 0) \end{cases}$$

As can be seen in Math. 1, $\delta_k$ is 1 when at least one indoor unit is coupled to the outdoor unit k (k $\in$ K), and is 0 when no indoor unit is coupled.
The constraint condition between the symbols described above is as follows.

[Math. 2]

$$\sum_{j \in J} \sum_{k \in K} x_{ijk} \leq l_i , {}^{\forall}i \in I$$

$$\sum_{k \in K} \delta_k \leq n$$

$$\sum_{i \in I} \sum_{j \in J} x_{ijk} \leq m_k , {}^{\forall}k \in K$$

$$\sum_{j \in J} \sum_{k \in K} a_j x_{ijk} \geq \max_{t \in T}(b_{it}) , {}^{\forall}i \in I$$

$$\sum_{v \in V} d_v y_{iv} \geq c_i , {}^{\forall}i \in I$$

$$\frac{1}{2} e_k \delta_k \sum_{i \in I} \sum_{j \in J} a_j x_{ijk} \leq 2 e_k \delta_k , {}^{\forall}k \in K$$

The expressions search source combination, tentative optimal combination, and optimal combination used in the above description on the Iterated local search are used with the same meanings in the description below.

(4-1) First combination selection unit

The first combination selection unit 210 selects a first combination that is a candidate of the optimal combination, based on a selection criterion for selecting the first combination. The first combination corresponds to the combination selected by the initialization or the neighbor search in the above description on the Iterated local search. In the present embodiment, the selection criterion includes a first selection criterion and a second selection criterion.

The first selection criterion is a criterion for selecting an arbitrary combination as the first combination at the time of initialization.

The second selection criterion is a criterion for selecting the first combination by neighbor search based on the search source combination. With the second selection criterion, the first combination is selected based on a result of sampling from a β distribution, which is a probability distribution. Specifically, the second selection criterion is a criterion for selecting a type of the neighbor search based on a result of sampling from the β distribution, and selecting the first combination based on the selected type of the neighbor search.

The β distribution is a continuous probability distribution with a random variable being a real number equal to or larger than 0 and equal to or smaller than 1. Thus, a real number that is equal to or larger than 0 and equal to or smaller than 1 is obtained as a result of sampling from the β distribution. The β distribution is expressed by the following formula.

[Math. 3]

$$Beta_\lambda(\alpha, \beta) = \frac{\Gamma(\alpha + \beta)}{\Gamma(\alpha)\Gamma(\beta)} \lambda^{\alpha-1}(1 - \lambda)^{\beta-1}$$

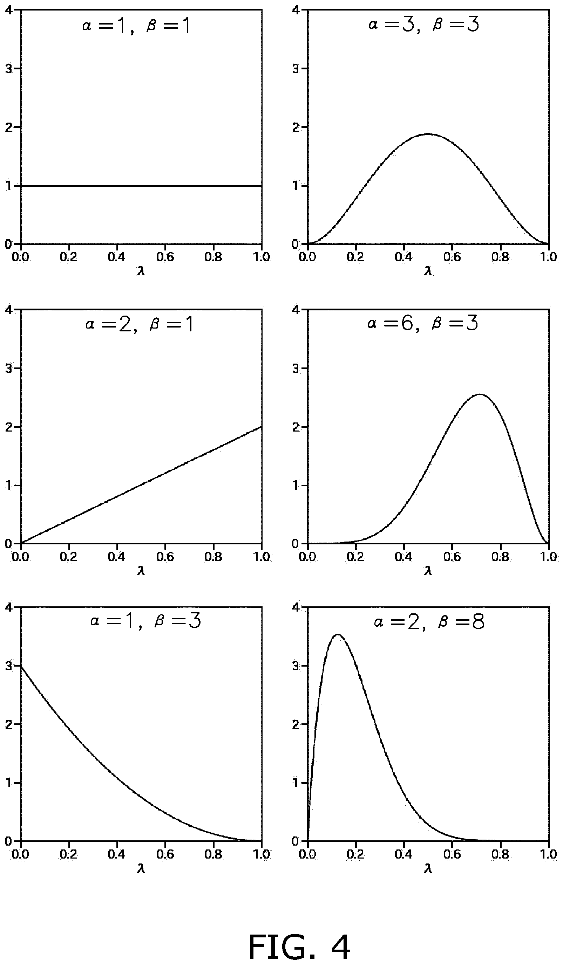

In the formula, $\lambda$ is a random variable, $\Gamma$ is a gamma function, and $\alpha$ and $\beta$ are parameters of positive real values. The average of the β distribution is represented by $\alpha/(\alpha + \beta)$. Thus, a change in the value of $\alpha$ or $\beta$ results in a change in the probability of a value sampled from the β distribution. For example, $\alpha$ larger than $\beta$ results in the average closer to 1, and thus a value close to 1 is likely to be sampled. On the other hand, $\beta$ larger than $\alpha$ results in the average closer to 0, and thus a value close to 0 is likely to be sampled. FIG. 4 is a diagram illustrating an example of the β distribution. The upper part of FIG. 4 illustrates cases where $\alpha$ and $\beta$ are the same. The left side of the upper part illustrates a case where $\alpha$ = 1 and $\beta$ = 1. In this case, the β distribution is a uniform distribution. The right side of the upper part illustrates a case where $\alpha$ = 3 and $\beta$ = 3. In this case, the β distribution is a probability distribution from which a value close to 0.5 is likely to be sampled. The middle part of FIG. 4 illustrates cases where $\alpha$ is larger than $\beta$. The left side of the middle part illustrates a case where $\alpha$ = 2 and $\beta$ = 1, and the right side of the middle part illustrates a case where $\alpha$ = 6 and $\beta$ = 3. From these two figures, it can be understood that a larger difference between $\alpha$ and $\beta$ ($\alpha > \beta$) results in a higher possibility of a value close to 1 being sampled from the β distribution. The lower part of FIG. 4 illustrates cases where $\alpha$ is smaller than $\beta$. The left side of the lower part illustrates a case where $\alpha$ = 1 and $\beta$ = 3, and the right side of the lower part illustrates a case where $\alpha$ = 2 and $\beta$ = 8. From these two figures, it can be understood that a larger difference between $\alpha$ and $\beta$ ($\alpha < \beta$) results in a higher possibility of a value close to 0 being sampled from the β distribution.

In the present embodiment, the following ten types are set as the types of neighbor search selected with the second selection criterion.

<1> One arbitrary indoor unit is newly added. The outdoor unit to be coupled and the zone for installation are arbitrary.
<2> One existing indoor unit is arbitrarily selected and deleted.
<3> One existing outdoor unit is arbitrarily selected to be replaced with another arbitrary outdoor unit.
<4> One existing indoor unit is arbitrarily selected to be replaced with another arbitrary indoor unit.
<5> One existing indoor unit is arbitrarily selected, and the outdoor unit to be coupled is replaced with another arbitrary existing outdoor unit.
<6> One arbitrary ventilation device is newly added. The zone for installation is arbitrary.
<7> One existing ventilation device is arbitrarily selected and deleted.
<8> One existing ventilation device ventilating one zone is arbitrarily selected to be replaced with another arbitrary ventilation device.
<9> One existing ventilation device ventilating a plurality of zones is arbitrarily selected to be replaced with another arbitrary ventilation device.
<10> Two ventilation zones are arbitrarily selected to be integrated into one.

The β distribution is assumed to independently correspond to the neighbor search of each of these ten types. With the second selection criterion, sampling is independently performed from the β distribution of each of these ten types, and the type of the neighbor search corresponding to the β distribution yielding the largest value is selected. Then, the first combination is selected at random within a range of the determined type of the neighbor search, under the constraint condition of Math. 2. For example, in FIG. 1, when the above-described type <1> of the neighbor search is selected, the first combination such as "the first combination in which one indoor unit 20 is newly installed in the zone 40a and coupled to the outdoor unit 10a" or "the first combination in which one indoor unit 20 is newly installed in the zone 40b and coupled to the outdoor unit 10b" is selected at random under the constraint condition of Math. 2.

(4-2) Index calculation unit

When the first combination is selected by the first combination selection unit 210, the index calculation unit 220 calculates a predetermined index with the selected first combination. The predetermined index is an objective function in an optimization problem. In the present embodiment, the objective function includes a total cost and a term related to a constraint condition regarding unprocessed thermal load.

(4-2-1) Total cost

As described above, the total cost is a sum of electricity cost and device cost.

(4-2-2) Electricity cost

In order to calculate the electricity cost, the index calculation unit 220 first calculates the power consumption required for the first combination in the target period.
In order to calculate the power consumption required for the first combination in the target period, the index calculation unit 220 calculates the power consumptions at numerous time points in the target period through simulation, and sums the power consumptions up. Power consumption $f(x,y)$ required for a first combination $(x,y)$ in the target period is formulated as follows.

[Math. 4]

$$f(x,y) = \sum_{t \in T} f_t(x,y)$$

In the formula, $f_t(x,y)$ is power consumption required for the first combination $(x,y)$ at a time point t ($t \in T$) in the target period. For example, when the target period is one year, a set T of data at the time points in the target period is a set of data at time points at an interval of an hour within the year. This set T includes 8760 elements (= 365 days $\times$ 24 hours/day).
After calculating the power consumption required for the first combination in the target period, the index calculation unit 220 calculates an electricity charge (electricity cost) required for the first combination in the target period based on the power consumption. The electricity charge is calculated using a price list of a predetermined electric power company, based on the power consumption, for example. Here, $F(x,y)$ denotes the electricity cost calculated from the power consumption $f(x,y)$ required for the first combination $(x,y)$ in the target period.

(4-2-3) Device cost

The index calculation unit 220 calculates the device cost required for the first combination. Device cost $g(x,y)$ is formulated as follows.

[Math. 5]

$$g(x,y) = \sum_{i \in I} \sum_{j \in J} \sum_{k \in K} p_j x_{ijk} + \sum_{k \in K} q_k \delta_k + \sum_{i \in I} \sum_{v \in V} r_v y_{iv}$$

(4-2-4) Unprocessed thermal load

The optimization problem according to the present embodiment is an optimization problem with a constraint condition. The constraint condition is about regulating the unprocessed thermal load at each time point in the target period to be not larger than an allowable value. The unprocessed thermal load is an amount of thermal load not processable due to the processable thermal load of the indoor unit 20 disposed in the zone 40 falling below the thermal load on the zone 40 in FIG. 1. The unprocessed thermal load with the first combination at each time point in the target period is calculated through simulation. The constraint condition for unprocessed thermal load $u_t(x)$ is formulated as follows.

[Math. 6]

$$u_t(x) \le s, \; {}^{\forall}t \in T$$

In the formula, s is the allowable value of the unprocessed thermal load.

The optimization problem with a constraint condition can be converted into an optimization problem with no constraint condition when the constraint condition is incorporated in the objective function as a penalty term. Thus, in the present embodiment, the objective function includes a term related to the constraint condition for the unprocessed thermal load.

(4-2-5) Objective function

In view of the above, an objective function H(x,y) of the optimization problem according to the present embodiment is formulated as follows.

[Math. 7]

$$H(x,y) = F(x,y) + g(x,y) + \rho \sum_{t \in T} max\{0, u_t(x) - s\}$$

In the formula, $\rho$ is a positive parameter.

(4-3) Evaluation unit

When the index is calculated by the index calculation unit 220, the evaluation unit 230 evaluates the first combination selected by the first combination selection unit 210, based on the calculated index (objective function). Specifically, the evaluation unit 230 evaluates whether the index value yielded from the first combination selected by the first combination selection unit 210 is smaller than the index value yielded from the search source combination. When the index value yielded from the first combination is smaller than the index value yielded from the search source combination, the evaluation unit 230 outputs an evaluation result in which the type of the neighbor search with which the first combination is selected is associated with a numerical value "1". When the index value yielded from the first combination is equal to or larger than the index value yielded from the search source combination, the evaluation unit 230 outputs an evaluation result in which the type of the neighbor search with which the first combination is selected is associated with a numerical value "0".

The evaluation unit 230 does not evaluate the first combination selected by the first initialization even if the index yielded from the first combination selected by the first initialization is calculated, since no search source combination is set at this timing.

(4-4) Storage unit

The storage unit 240 stores the first combination selected by the first combination selection unit 210, the index calculated by the index calculation unit 220, and the evaluation result output by the evaluation unit 230 in the storage device one by one.

(4-5) Selection criterion update unit

The selection criterion update unit 250 updates the second selection criterion based on the evaluation result stored by the storage unit 240. In the present embodiment, the selection criterion update unit 250 updates the $\beta$ distribution used with the second selection criterion. The selection criterion update unit 250 updates the $\beta$ distribution by using Bayes' theorem as expressed below.

[Math. 8]

$$P(\lambda|x) = \frac{P(x|\lambda)P(\lambda)}{P(x)}$$

In the formula, $P(\lambda)$ is a prior distribution, $P(x|\lambda)$ is a likelihood, $P(x)$ is a normalization constant, and $P(\lambda|x)$ is a posterior distribution.

The following formula holds with a $\beta$ distribution $Beta_\lambda(\alpha,\beta)$ and a Bernoulli distribution $Bern_x(\lambda)$ respectively serving as the prior distribution and the likelihood of Bayes' theorem.

[Math. 9]

$$Bern_x(\lambda) \cdot Beta_\lambda(\alpha,\beta) = Beta_\lambda(x + \alpha, 1 - x + \beta)$$

This Bernoulli distribution $Bern_x(\lambda)$ is a probability distribution in which $x = 1$ is sampled at probability $\lambda$ and $x = 0$ is sampled at probability $1-\lambda$. It can be understood that with Math. 9, a $\beta$ distribution $Beta_\lambda(x+\alpha,1-x+\beta)$ is obtained as the posterior distribution, with the $\beta$ distribution $Beta_\lambda(\alpha,\beta)$ and the Bernoulli distribution $Ber_x(\lambda)$ respectively serving as the prior distribution and the likelihood.

When $x = 1$ is sampled from the Bernoulli distribution, the $\beta$ distribution (prior distribution) whose parameters are $\alpha$ and $\beta$ is updated to a $\beta$ distribution (posterior distribution) whose parameters are $\alpha+1$ and $\beta$. On the other hand, when $x = 0$ is sampled from the Bernoulli distribution, the $\beta$ distribution (prior distribution) whose parameters are $\alpha$ and $\beta$ is updated to a $\beta$ distribution (posterior distribution) whose parameters are $\alpha$ and $\beta+1$. Thus, the selection criterion update unit 250 associates the result of sampling from the Bernoulli distribution with the evaluation result.

Specifically, when the evaluation result is "1", the selection criterion update unit 250 regards that "1" is sampled from the Bernoulli distribution. Then, the selection criterion update unit 250 updates the $\beta$ distribution by adding 1 to the parameter $\alpha$ of the $\beta$ distribution corresponding to the type of the neighbor search at this time. With a larger value of the parameter $\alpha$, a larger value is likely to be sampled from the $\beta$ distribution. Thus, this type of the neighbor search is more likely to be selected by the first combination selection unit 210. This is equivalent to reflection, on the second selection criterion, of an evaluation result" 1" of the first combination selected from the type of the neighbor search. On the other hand, when the evaluation result is "0", the selection criterion update unit 250 regards that "0" is sampled from the Bernoulli distribution. Then, the selection criterion update unit 250 updates the $\beta$ distribution by adding 1 to the parameter $\beta$ of the $\beta$ distribution corresponding to the type of the neighbor search at this time. With a larger value of the parameter $\beta$, a smaller value is likely to be sampled from the $\beta$ distribution. Thus, this type of the neighbor search is less likely to be selected by the first combination selection unit 210. This is equivalent to reflection, on the second selection criterion, of an evaluation result "0" of the first combination selected from the type of the neighbor search.

Furthermore, the selection criterion update unit 250 updates the search source combination used in the second selection criterion under a predetermined condition. Specifically, when the evaluation result is "1", the selection criterion update unit 250 sets the first combination at this time as the search source combination. When the evaluation result is "0", the selection criterion update unit 250 does not update the search source combination. The selection criterion update unit 250 sets the first combination selected by the initialization as the search source combination, regardless of the evaluation result.

(4-6) Combination determination unit

The combination determination unit 260 determines the optimal combination based on at least a first combination previously selected and the index associated with the first combination previously selected that are stored by the storage unit 240. Specifically, every time the search source combination is updated, the combination determination unit 260 sets the first combination having the smallest index value at the timing of the update as the tentative optimal combination. The combination determination unit 260 determines the tentative optimal combination after all searches are finished, as the optimal combination.

(5) Processing

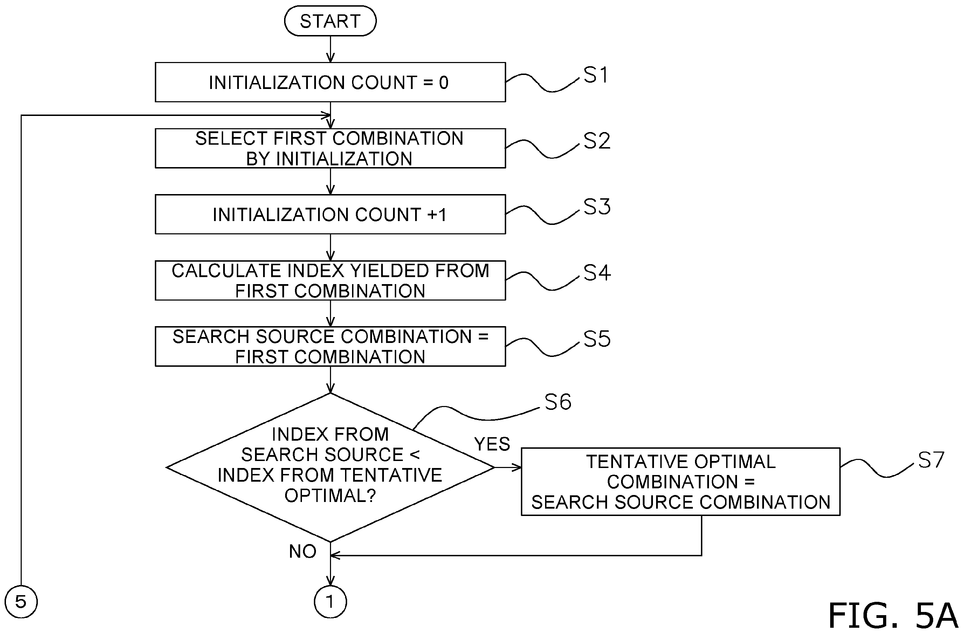

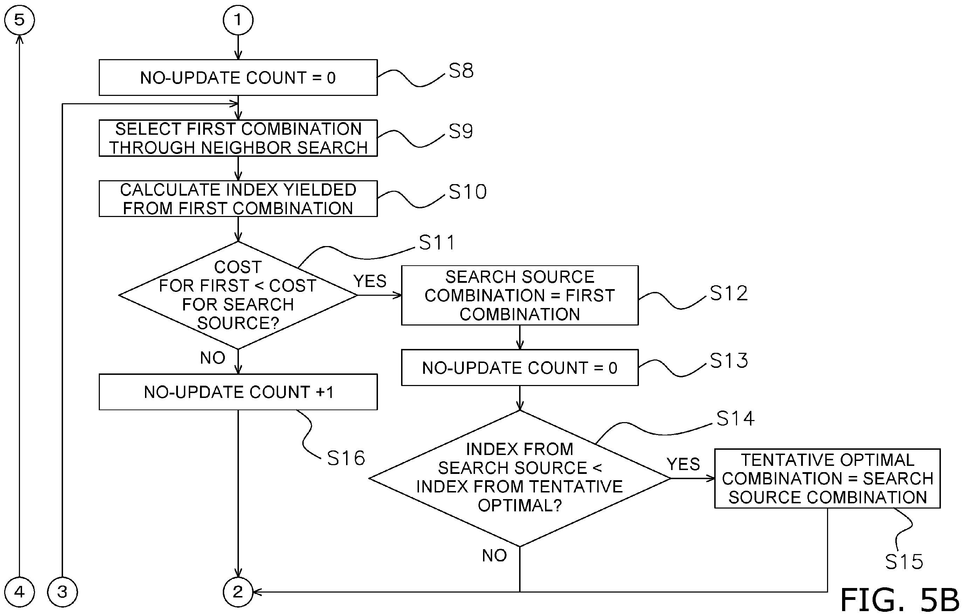

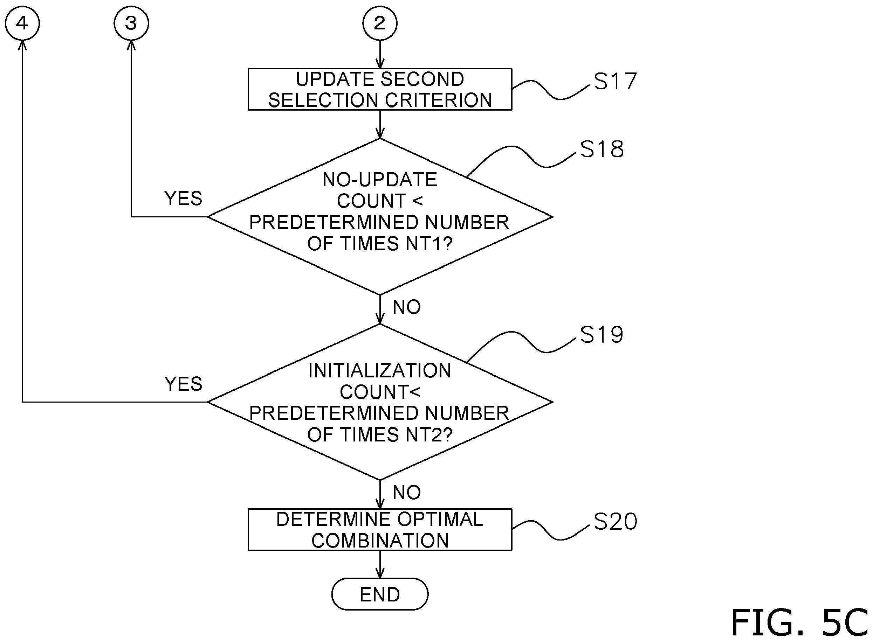

The optimization processing executed by the combination determination system 200 will be described with reference to flowcharts illustrated in FIG. 5A to FIG. 5C.

The combination determination system 200 sets an initialization count to 0 as illustrated in step S1. The initialization count indicates the number of times the initialization has been performed.

After completing step S1, the combination determination system 200 selects the first combination by the initialization as illustrated in step S2.

After completing step S2, the combination determination system 200 increments the initialization count by one as illustrated in step S3.

After completing step S3, the combination determination system 200 calculates an index yielded from the selected first combination as illustrated in step S4.

After completing step S4, the combination determination system 200 sets the selected first combination as the search source combination as illustrated in step S5.

After completing step S5, the combination determination system 200 determines whether the index value yielded from the search source combination is smaller than the index value yielded from the tentative optimal combination as illustrated in step S6. When the index value yielded from the search source combination is smaller than the index value yielded from the tentative optimal combination, the combination determination system 200 proceeds to step S7. When the index value yielded from the search source combination is not smaller than the index value yielded from the tentative optimal combination, the combination determination system 200 proceeds to step S8.

Upon proceeding from step S6 to step S7, the combination determination system 200 sets the search source combination to be the tentative optimal combination. At the time of first initialization, no tentative optimal combination for comparison has been set. Meanwhile, step S6 and step S7 are for setting the first combination yielding the smallest index value at that time point as the tentative optimal combination, and thus the processing proceeds from step S6 to step S7 at the time of first initialization to set the search source combination to be the tentative optimal combination.

Upon proceeding from step S6 to step S8 or completing step S7, the combination determination system 200 sets a no-update count to 0 as illustrated in step S8. The no-update count indicates the number of times the first combination selected is not set as the search source combination.

Upon completing step S8, the combination determination system 200 selects the first combination through neighbor search as illustrated in step S9.

After completing step S9, the combination determination system 200 calculates an index yielded from the selected first combination as illustrated in step S10.

After completing step S10, the combination determination system 200 determines whether the index value yielded from the selected first combination is smaller than the index value yielded from the search source combination as illustrated in step S11. When the index value yielded from the selected first combination is smaller than the index value yielded from the search source combination, the combination determination system 200 proceeds to step S12. When the index value yielded from the selected first combination is not smaller than the index value yielded from the search source combination, the combination determination system 200 proceeds to step S16.

Upon proceeding from step S11 to step S12, the combination determination system 200 sets the first combination to be the search source combination.

Upon completing step S12, the combination determination system 200 sets the no-update count to 0 as illustrated in step S13.

After completing step S13, the combination determination system 200 determines whether the index value yielded from the search source combination is smaller than the index value yielded from the tentative optimal combination as illustrated in step S14. When the index value yielded from the search source combination is smaller than the index value yielded from the tentative optimal combination, the combination determination system 200 proceeds to step S15. When the index value yielded from the search source combination is not smaller than the index value yielded from the tentative optimal combination, the combination determination system 200 proceeds to step S17.

Upon proceeding from step S14 to step S15, the combination determination system 200 sets the search source combination to be the tentative optimal combination.

Upon proceeding from step S11 to step S16, the combination determination system 200 increments the no-update count by 1.

Upon completing step S16, or proceeding from step S14 to step S17 or completing step S15, the combination determination system 200 updates the second selection criterion as illustrated in step S17.

Upon completing step S17, the combination determination system 200 determines whether the no-update count has reached a predetermined number of times NT1 as illustrated in step S18. The predetermined number of times NT1 is a number of times after which the search source combination is not expected to be updated through further neighbor search. When the no-update count is smaller than the predetermined number of times NT1, the combination determination system 200 returns to step S9 to perform further neighbor search. When the no-update count is not smaller than the predetermined number of times NT1, the combination determination system 200 proceeds to step S19.

Upon proceeding from step S18 to step S19, the combination determination system 200 determines whether the initialization count has reached a predetermined number of times NT2 as illustrated in step S19. The predetermined number of times NT2 is a number of times after which the tentative optimal combination is not expected to be updated through further initialization. When the initialization count is smaller than the predetermined number of times NT2, the combination determination system 200 returns to step S2 to perform initialization. When the initialization count is not smaller than the predetermined number of times NT2, the combination determination system 200 proceeds to step S20.

Upon proceeding from step S19 to step S20, the combination determination system 200 determines the tentative optimal combination as the optimal combination as illustrated in step S20.

(6) Test

In this test, the optimization speed of the method by the combination determination system 200 of the present embodiment was compared with the optimization speeds of conventional methods. Two conventional methods were used for this test.

One of the conventional methods (hereafter, referred to as an equal probability method) is a method of selecting each type of neighbor search at random with a probability that is the same among the types of neighbor search.

The other one of the conventional methods (hereafter, referred to as an average value method) is a method of selecting the type of neighbor search with the largest average value, with the average value being calculated before the selection of the type of neighbor search, using the evaluation results stocked for each type of neighbor search. When there are a plurality of types of neighbor search with the largest average value, one of them is selected at random. This evaluation result is an index improvement amount achieved by selecting the first combination with the neighbor search. Specifically, the index improvement amount is a value obtained by subtracting the index value yielded from the first combination selected through the neighbor search based on the search source combination from the index value yielded from the search source combination. It can be estimated that a type of neighbor search that has a larger average value of the index improvement amounts is more likely to improve the index and the amount of improvement is larger.

Note that the evaluation result for the average value method may be "1" when the index is improved and "0" when the index is not improved, as in the case of the evaluation result of the present embodiment. In this case, the average value of the evaluation results of a certain type of neighbor search means the probability that the selection of this type of neighbor search results in improvement in the index.

(6-1) Problem setting

For this test, six zones listed in Table 1 below were prepared. Table 1 lists the maximum thermal load and ventilation load for each zone.

[Table 1]

|  | Zone | | | | | |
|---|---|---|---|---|---|---|
|  | A | B | C | D | E | F |
| Maximum thermal load (kW) | 7.74 | 8.18 | 2.39 | 9.66 | 5.45 | 12.72 |
| Ventilation load (CMH) | 250 | | | | | |

In this test, ten types of indoor units listed in Table 2 below were used. Table 2 lists the thermal loads processable by the respective indoor units.

[Table 2]

|  | Indoor unit | | | | | | | | | |
|---|---|---|---|---|---|---|---|---|---|---|
|  | A | B | C | D | E | F | G | H | I | J |
| Processable thermal load (kW) | 2.8 | 3.6 | 4.5 | 5.6 | 7.1 | 8 | 9 | 11.2 | 14 | 16 |

In this test, four types of outdoor units listed in Table 3 below were used. Table 3 lists the thermal loads processable by the respective outdoor units.

[Table 3]

|  | Outdoor unit | | | |
|---|---|---|---|---|
|  | A | B | C | D |
| Processable thermal load (kW) | 22.4 | 28.0 | 33.5 | 40.0 |

In this test, 20 types of ventilation devices listed in Table 4 below were used. Table 4 lists the ventilation loads processable by the respective ventilation devices.

[Table 4]

| Type of ventilation device | Processable ventilation load (CMH) | | | | | | | | |
|---|---|---|---|---|---|---|---|---|---|
| Type A | 150 | 250 | 350 | 500 | 650 | 800 | 1000 | 1500 | 2000 |
| Type B | 150 | 250 | 350 | 500 | 650 | 800 | 1000 | - | 2000 |
| Type C | - | 250 | - | 500 | - | - | - | - | 2000 |

In this test, predetermined prices were set as the prices of the indoor units, the outdoor units, and the ventilation devices. The upper limit of the number of indoor units that can be installed in each zone was set to two. The upper limit of the number of indoor units that can be coupled to each outdoor unit was set to six. The upper limit of the number of outdoor units was set to four. The allowable value of the unprocessed thermal load was set to 5.5 kW.

In this test, the target period was set to one predetermined year. In this case, the power consumption and the unprocessed thermal load over the one year may be calculated by calculating the power consumption and the unprocessed thermal load at each of the 8760 time points (at an interval of one hour) over the one year, and summing them up. However, such an option requires a huge calculation cost. Thus, sparse estimation and extreme value statistics were used for this test, to estimate the power consumption and the unprocessed thermal load over the one year, from the power consumption and the unprocessed thermal load at some of the 8760 time points. Specifically, regarding the power consumption, the power consumption over the one year was able to be estimated from the power consumption at 128 out of the 8760 time points, using sparse estimation. The unprocessed thermal load over the one year was able to be estimated from the unprocessed thermal load at 138 time points including the 128 time points and 10 additional time points, using extreme value statistics.

In this test, the electricity charge was calculated using a price list of a predetermined electric power company, based on the power consumption.

In this test, a computer having a CPU that is "3.60 GHz Intel(R) Core(TM) i9-9900K processor" and a memory of 32 GB was used.

In this test, optimization was performed so as to minimize the objective function of Math. 7 while taking into account the constraint conditions in Math. 2 and Math. 6, in the problem setting as described above.

(6-2) Results

Table 5 lists the average values and variances of 50 total costs calculated by performing the operation of "calculating the total cost after updating the search source combination 100 times" 50 times in each method.

[Table 5]

| | Average value | Variance |
|---|---|---|
| Equal probability method | 7,621 | 183,272 |
| Average value method | 7,762 | 139,629 |
| Present embodiment | 7,476 | 84,579 |

The average value of the total costs obtained with the combination determination system 200 of the present embodiment is smaller than that with the equal probability method. This means that the combination determination system 200 of the present embodiment features faster optimization speed than that with the equal probability method. The variance of the total costs obtained with the combination determination system 200 of the present embodiment is smaller than that with the equal probability method. This means that the combination determination system 200 of the present embodiment performs optimization more stably than the equal probability method does. With the equal probability method, the types of neighbor search are totally searched but the stocked evaluation results are not utilized at all. Thus, the equal probability method offers an inferior optimization efficiency than the combination determination system 200 of the present embodiment in terms of both average and variance.

The average value of the total costs obtained by the combination determination system 200 of the present embodiment is smaller than that with the average value method. This means that the combination determination system 200 of the present embodiment features faster optimization speed than that with the average value method. The variance of the total costs obtained by the combination determination system 200 of the present embodiment is smaller than that with the average value method. This means that the combination determination system 200 of the present embodiment performs optimization more stably than the average value method does. The average value method is only about utilizing the stocked evaluation results, and does not include total search on the types of neighbor search. In other words, with the average value method, the type of neighbor search selected is biased, meaning that some types of neighbor search are almost never selected. As a result, the average value method offers an inferior optimization efficiency than the combination determination system 200 of the present embodiment in terms of both average and variance.

(7) Features

(7-1)
There is a conventional technique of solving a combination optimization problem to determine a combination of a plurality of targets yielding an optimal value of a predetermined index.
Unfortunately, the conventional method of solving a combination optimization problem has a problem in that the optimization cannot be efficiently achieved because candidates of the combination yielding the optimal value of the predetermined index are selected at random.
When determining a combination yielding an optimal predetermined index as a combination of a plurality of targets, the combination determination system 200 of the present embodiment selects first combinations that are candidates of an optimal combination based on selection criteria. Among the selection criteria, the second selection criterion is sequentially updated based on the evaluation result of each first combination. As a result, the combination determination system 200 selects the first combination not at random but based on the evaluation result, whereby the optimization can be efficiently performed.
(7-2)
In the combination determination system 200 of the present embodiment, the second selection criterion is for selecting the first combination based on a result of sampling from a predetermined probability distribution. As a result, the combination determination system 200 can select the first combination by utilizing the evaluation result on one hand, and can select the first combination that is unlikely to be selected from the evaluation result on the other hand.
(7-3)
In the combination determination system 200 of the present embodiment, the probability distribution is a $\beta$ distribution. As a result, the combination determination system 200 can update the $\beta$ distribution as the posterior distribution after selecting the first combination.
(7-4)
In the combination determination system 200 of the present embodiment, the plurality of targets are a plurality of devices forming the air conditioning system 100. The plurality of devices at least include the outdoor units 10 and the indoor units 20. The predetermined index includes a total cost for a plurality of devices installed. As a result, the combination determination system 200 can determine the device configuration, including the outdoor units 10, the indoor units 20, and the like, that optimizes (minimizes) the total cost and the like.

(8) Modifications

(8-1) Modification 1A

In the present embodiment, the combination determination system 200 uses Thompson sampling for the Iterated local search. Alternatively, what is known as an Epsilon-Greedy approach may be used for the Iterated local search.
In this case, the second selection criterion is a criterion for "selecting the first combination at random with a probability $\varepsilon$, and selecting the first combination based on an average value calculated from the evaluation results stored by the storage unit 240 with a probability 1-$\varepsilon$". Specifically, when selecting the first combination using the second selection criterion, the first combination selection unit 210 selects the first combination using the equal probability method with the probability $\varepsilon$, and selects the first combination using the average value method with the probability 1-$\varepsilon$. This $\varepsilon$ is a real number equal to or larger than 0 and equal to or less than 1. The value $\varepsilon$ may be decreased as the search progresses.
The selection criterion update unit 250 updates the average value of the above-described second selection criterion before the selection of the type of neighbor search. Furthermore, the selection criterion update unit 250 updates the search source combination as in the present embodiment. When the evaluation result is the index improvement amount, the selection criterion update unit 250 sets the first combination yielding the index improvement amount of a positive value as the search source combination. When the index improvement amount is not of a positive value, the selection criterion update unit 250 does not update the search source combination.
As a result, the combination determination system 200 can select the first combination that is unlikely to be selected from the evaluation result with the probability $\varepsilon$, and can select the first combination by utilizing the average value calculated from the evaluation result with the probability 1-$\varepsilon$.

(8-2) Modification 1B

In the present embodiment, the combination determination system 200 uses Thompson sampling for the Iterated local search. Alternatively, what is known as an Upper Confidence Bound (UCB) method may be used for the Iterated local search.

In this case, the second selection criterion is a criterion for "selecting the first combination based on the average value and the number of selected times that are calculated from the evaluation results stored by the storage unit 240". Specifically, when selecting the first combination using the second selection criterion, the first combination selection unit 210 selects the type of neighbor search with which the following score is maximized.

[Math. 10]

$$\text{Score} = \text{Average value} + \sqrt{\frac{\log t}{2N(t)}}$$

In the formula, the average value is an average value of evaluation results obtained by the average value method, t is the ordinal number of the neighbor search, and $N(t)$ is the number of times each type of neighbor search has been selected (number of selected times) until the ordinal number of the neighbor search is reached.

The selection criterion update unit 250 updates the above-described score before the selection of the type of neighbor search. Furthermore, the selection criterion update unit 250 updates the search source combination as in the present embodiment. When the evaluation result is the index improvement amount, the selection criterion update unit 250 sets the first combination yielding the index improvement amount of a positive value as the search source combination. When the index improvement amount is not of a positive value, the selection criterion update unit 250 does not update the search source combination.

As a result, the combination determination system 200 can select the first combination by utilizing the average value calculated from the evaluation results on one hand, and can select the first combination that is unlikely to be selected from the evaluation result while taking into account the number of selected times calculated from the evaluation results on the other hand. Since the number of selected times is in the denominator of Math. 10, even a type of neighbor search with a small average value calculated from the evaluation results is likely to be selected if the number of selected times thereof is small.

(8-3) Modification 1C

In the present embodiment, the combination determination system 200 takes into account the unprocessed thermal load or the like as the constraint condition. The combination determination system 200 may further take into account the thermal load attributable to the ventilation device as the constraint condition. As a result, the combination determination system 200 can determine an optimal combination that is more suitable for the actual condition.

The thermal load attributable to the ventilation device is a thermal load as a result of the ventilation device 30 making the outside air flow into the zone 40 in FIG. 1. The constraint condition regarding the thermal load attributable to the ventilation device is for regulating the thermal load that is a sum of the predetermined thermal load on the zone and the thermal load attributable to the ventilation device not to exceed the thermal load processable by the indoor unit installed in the zone. The thermal load as the sum of the predetermined thermal load on the zone and the thermal load attributable to the ventilation device generally varies among time points in the target period. Thus, of various such thermal loads, the largest one is used herein. The constraint condition on a thermal load $w_{it}(y)$ attributable to the ventilation device is formulated as follows.

[Math. 11]

$$\sum_{j \in J} \sum_{k \in K} a_j x_{ijk} \geq \max_{t \in T}\{b_{it} + w_{it}(y)\} , \,^{\forall} i \in I$$

Math. 11 is obtained by adding the thermal load $w_{it}(y)$ attributable to the ventilation device to the fourth mathematical expression from the top in Math. 2. The index calculation unit 220 calculates the thermal load attributable to the ventilation device through simulation, as in the case of the unprocessed thermal load.

This constraint condition is incorporated in the objective function, as in the case of the unprocessed thermal load. As a result, the objective function of Math. 7 is modified as follows.

[Math. 12]

$$H(x, y) = F(x, y) + g(x, y) + \rho \sum_{t \in T} max\{0, u_t(x) - s\}$$

$$+ \lambda \sum_{i \in I} max\left[0, \max_{t \in T}\{b_{it} + w_{it}(y)\} - \sum_{j \in J}\sum_{k \in K} a_j x_{ijk}\right]$$

(8-4) Modification 1D

In the present embodiment, the combination determination system 200 determines one combination yielding the smallest value of the predetermined index, among the combinations of the devices forming the air conditioning system 100. Alternatively, the combination determination system 200 may determine N (N≥2) combinations in the ascending order of the value of the predetermined index. As a result, the user of the combination determination system 200 can select a combination from the plurality of combinations determined.

In this case, after all the searches have been completed, the combination determination unit 260 may determine a plurality of first combinations, stored by the storage unit 240, corresponding to the respective N smallest values of the index, in the ascending order of the value of the index.

(8-5) Modification 1E

In the present embodiment, the combination determination system 200 is used to determine an optimal combination of devices forming the air conditioning system 100. Alternatively, the combination determination system 200 may be used to determine an optimal combination of devices forming any device system.

Furthermore, the combination determination system 200 may be used to determine an optimal combination of control parameters of devices forming any device system. Examples of the control parameters include a set temperature, set humidity, and the like in each zone 40 in the air conditioning system 100. Examples of the predetermined index in this case include a total cost, an index indicating comfort, and the like.

Furthermore, the combination determination system 200 may be used to determine an optimal combination of parts forming any device. Examples of the predetermined index in this case include a total cost, an index indicating compatibility of the parts, and the like.

The combination determination system 200 may be used to determine an optimal combination of contents such as an energy saving service. Examples of the predetermined index in this case include a total cost, an index indicating an energy saving effect, and the like.

(8-6)

While embodiments of the present disclosure have been described above, it should be understood that various changes in mode and detail may be made without departing from the spirit and scope of the present disclosure as set forth in the claims.

**REFERENCE SIGNS LIST**

| | |
|---|---|
| 10, 10a, and 10b | Outdoor unit |
| 20, 20a to 20f | Indoor unit |
| 100 | Air conditioning system |
| 200 | Combination determination system |
| 210 | First combination selection unit |
| 220 | Index calculation unit |
| 230 | Evaluation unit |
| 240 | Storage unit |
| 250 | Selection criterion update unit |
| 260 | Combination determination unit |

**CITATION LIST**

**PATENT LITERATURE**

[PTL 1] Japanese Unexamined Patent Publication No. 2006-48475

**Claims**

1.   A combination determination system (200) configured to determine a combination of a plurality of targets, the combination determination system comprising:

   a first combination selection unit (210) configured to select a first combination that is a candidate of the combination, based on a selection criterion for selecting the first combination;
   an index calculation unit (220) configured to calculate a predetermined index yielded from the first combination selected;
   an evaluation unit (230) configured to evaluate the first combination selected, based on the index calculated;
   a storage unit (240) configured to store the first combination selected, the index calculated, and an evaluation result obtained by the evaluation unit;
   a selection criterion update unit (250) configured to update the selection criterion based on the evaluation result stored by the storage unit; and
   a combination determination unit (260) configured to determine the combination based on at least a first combination previously selected and the index associated with the first combination previously selected that are stored by the storage unit.

2.   The combination determination system (200) according to claim 1, wherein the selection criterion is for selecting the first combination based on a result of sampling from a predetermined probability distribution.

3.   The combination determination system (200) according to claim 2, wherein the probability distribution is a $\beta$ distribution.

4.   The combination determination system (200) according to claim 1, wherein the selection criterion is for selecting the first combination at random with a probability $\varepsilon$, and selecting the first combination based on an average value calculated from the evaluation result stored by the storage unit with a probability $1-\varepsilon$.

5.   The combination determination system (200) according to claim 1, wherein the selection criterion is for selecting the first combination based on an average value and number of selected times that are calculated from the evaluation result stored by the storage unit.

6.   The combination determination system (200) according to any one of claims 1 to 5, wherein

   the plurality of targets are a plurality of devices forming a device system, and
   the index includes a total cost for the plurality of devices installed.

7.   The combination determination system (200) according to claim 6, wherein

   the device system is an air conditioning system (100), and
   the plurality of devices at least include an outdoor unit (10, 10a, 10b) and an indoor unit (20, 20a, 20b, 20c, 20d, 20e, 20f).

FIG. 1

FIG. 2

200

COMBINATION DETERMINATION
SYSTEM

| FIRST COMBINATION SELECTION UNIT | 210 |

| INDEX CALCULATION UNIT | 220 |

| EVALUATION UNIT | 230 |

| STORAGE UNIT | 240 |

| SELECTION CRITERION UPDATE UNIT | 250 |

| COMBINATION DETERMINATION UNIT | 260 |

# FIG. 3

FIG. 4

FIG. 5A

FIG. 5B

FIG. 5C

EP 4 202 755 A1

### INTERNATIONAL SEARCH REPORT

| International application No. |
|---|
| **PCT/JP2021/035478** |

**A.    CLASSIFICATION OF SUBJECT MATTER**

*G06F 30/20*(2020.01)i; *F24F 11/46*(2018.01)i; *F24F 11/64*(2018.01)i; *G06F 111/06*(2020.01)n
FI:    G06F30/20; F24F11/46; F24F11/64; G06F111:06

According to International Patent Classification (IPC) or to both national classification and IPC

**B.    FIELDS SEARCHED**

Minimum documentation searched (classification system followed by classification symbols)
G06F30/00-30/398; F24F11/00-11/89; G06N99/00; G06Q10/04

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2012-208902 A (HONDA MOTOR CO., LTD.) 25 October 2012 (2012-10-25) paragraphs [0017]-[0077] | 1, 2 |
| Y | | 3-7 |
| Y | 大戸雄一朗外3名. 突然変異分布を調整した進化的アルゴリズム、2017年電子情報通信学会基礎・境界ソサイエティ／NOLTAソサイエティ大会講演論文集, 一般社団法人電子情報通信学会. 29 August 2017, p. 189, ISSN: 2189-700X, (Institute of Electronics, Information and Communication Engineers), non-official translation (OTO, Yuuichiro et al. Evolutionary Algorithm with Adjusted Mutation Distribution. Proceedings of the 2017 Engineering Science/NOLTA Society Conference of IEICE.) p. 189, left column, lines 8-27 | 3, 6, 7 |
| A | | 1, 2, 4, 5 |
| Y | JP 2018-032206 A (TOSHIBA CORP.) 01 March 2018 (2018-03-01) paragraphs [0071]-[0086] | 4-7 |
| A | | 1-3 |

☑ Further documents are listed in the continuation of Box C.        ☑ See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | "X"  document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&"  document member of the same patent family |
| "P" | document published prior to the international filing date but later than the priority date claimed | |

| Date of the actual completion of the international search | Date of mailing of the international search report |
|---|---|
| **02 December 2021** | **14 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
|---|
| **PCT/JP2021/035478** |

**C.    DOCUMENTS CONSIDERED TO BE RELEVANT**

| Category* | Citation of document, with indication, where appropriate, of the relevant passages | Relevant to claim No. |
|---|---|---|
| Y | JP 2003-120982 A (HITACHI, LTD.) 23 April 2003 (2003-04-23) <br>      claim 11 | 6, 7 |
| A | | 1-5 |
| Y | 井上晴貴外1名. 空調機構成問題に対する局所探索法. 第62回システム制御情報学会研究発表講演会講演論文集[CD-ROM], システム制御情報学会, May 2018, (Institute of Systems, Control and Information Engineers), non-official translation (INOUE, Haruki et al. Local Search Methods for Air Conditioner Configurational Problems. Proceedings of the 62nd Annual Conference of the Institute of Systems, Control and Information Engineers.) <br>      abstract | 7 |

Form PCT/ISA/210 (second sheet) (January 2015)

**INTERNATIONAL SEARCH REPORT**
Information on patent family members

| International application No. |
|---|
| **PCT/JP2021/035478** |

| Patent document cited in search report | | | Publication date (day/month/year) | Patent family member(s) | | | Publication date (day/month/year) |
|---|---|---|---|---|---|---|---|
| JP | 2012-208902 | A | 25 October 2012 | US | 2012/0254081 | A1 | |
| | | | | paragraphs [0024]-[0076] | | | |
| JP | 2018-032206 | A | 01 March 2018 | (Family: none) | | | |
| JP | 2003-120982 | A | 23 April 2003 | US | 2003/0070438 | A1 | |
| | | | | claim 11 | | | |
| | | | | KR | 10-2003-0032795 | A | |
| | | | | CN | 1412485 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006048475 A